# EUROPÄISCHE PATENTSCHRIFT

(11) **EP 1 523 119 B1**
(45) Veröffentlichungstag und Bekanntmachung des Hinweises auf die Patenterteilung: **01.05.2019**
(21) Anmeldenummer: 04077680.9
(22) Anmeldetag: 28.09.2004
(51) Int. Cl.: H04L 1/00

(54) **Verfahren und eine Vorrichtung zur fehlerabgesicherten Übertragung von Nutzdaten**
Method and apparatus for error-protected transmission of data
Procédé et dispositif de transmission de données protégées contre les erreurs

(30) Priorität: 08.10.2003 DE 10347381
(43) Veröffentlichungstag der Anmeldung: 13.04.2005
(73) Patentinhaber: Volkswagen Aktiengesellschaft, 38440 Wolfsburg (DE)
(72) Erfinder: Döring, Martin, 38124 Braunschweig (DE); Krömke, Carsten, 38126 Braunschweig (DE)
(74) Vertreter: Patentanwälte Bressel und Partner mbB

(56) Entgegenhaltungen:
- WO-A1-94/06080
- DE-A1- 4 335 913
- DE-A1- 10 002 537
- US-B1- 6 327 688
- THOMAS DOHMKE: "Bussysteme im Automobil CAN, FlexRay und MOST", INTERNET CITATION, März 2002 (2002-03), XP002331425, Gefunden im Internet: URL:http://thomas.domke.de/de/projekte/bus systeme [gefunden am 2005-06-10]

## Beschreibung

Die Erfindung bezieht sich auf ein Verfahren und eine Vorrichtung zur fehlerabgesicherten Übertragung von Nutzdaten in einem vernetzten, zeitgesteuerten Kommunikationssystem.

Ein vernetztes, zeitgesteuertes Kommunikationssystem umfasst mehrere Kommunikationseinheiten oder Knoten, die über ein Bussystem vernetzt sind. Kommunikationseinheiten oder Knoten des Systems, die untereinander Nachrichten austauschen, bilden so genannte Subsysteme oder Cluster. Ein Knoten ist mindestens mit einem Host-Controller, einem Kommunikations-Controller und einem Treiber-Baustein ausgebildet. Der Host-Controller ist einer Anwendungs-Ebene ("Application") zugeordnet und dient zur Abarbeitung von Anwendungssoftware im Knoten. Die wesentlichen Aufgaben des Kommunikations-Controllers bestehen darin, Daten des Host-Controllers an andere Knoten zu versenden und empfangene Daten für den Host-Controller aufzubereiten und diese somit dem Knoten zur Verfügung zu stellen. Host-Controller und Kommunikations-Controller können eine unterschiedliche Semantik aufweisen. Der Kommunikations-Controller arbeitet zeitgesteuert. Ein Erfassen und/oder Verarbeiten von Daten durch den Host-Controller erfolgt dagegen vorzugsweise anwendungs- und/oder ereignisgesteuert. Zwischen Host-Controller und Kommunikations-Controller kann für eine Übertragung von einer Ereignissteuerung in eine Zeitsteuerung eine Übergangsschicht vorgesehen werden. Diese Übergangsschicht wird als Kommunikations-Schnittstelle ("Communication Network Interface" CNI) oder Middleware-Layer bezeichnet. Eine derartige Übergangsschicht ist beispielsweise aus der WO 02/075557 A1 bekannt. Aufgabe des Treiber-Bausteins ist es, elektronische und/oder optische Übertragungssignale zu generieren und/oder empfangene Übertragungssignale für die softwaretechnische Weiterverarbeitung umzuwandeln.

Daten werden für die Übertragung in Datenrahmen ("Frames") gepackt. Ein Datenrahmen umfasst mindestens ein Nutzdaten-Segment und einen Header. Der Header geht dem Nutzdaten-Segment voraus. Im Header werden beispielsweise Protokollinformationen übertragen. Durch den Header ist ein Datenrahmen durch die Knoten eindeutig identifizierbar. Bei einem zeitgesteuerten System liest ein Kommunikations-Controller eines Knotens zu einem festgelegten und bekannten Zeitpunkt einen Datenrahmen aus einer zugeordneten Kommunikations-Schnittstelle aus und sendet ihn an die Kommunikations-Controller aller empfangenden Knoten des Subsystems zu einem ebenfalls festgelegten Zeitpunkt. Der Kommunikations-Controller übergibt die Daten an die ihm zugeordnete Kommunikations-Schnittstelle. Dabei werden frühere Versionen des Datenrahmens in der Kommunikations-Schnittstelle überschrieben.

Für eine gemeinsame Sicht auf die Daten, d.h. eine einheitliche Interpretation durch alle Knoten eines Kommunikationssystems oder eines Subsystems und/oder eine Verwendung von Daten mit gemeinsamer Zeitbasis, sind Vereinbarungen ("Agreements") über den Datenaustausch erforderlich. Protokollrelevante Informationen werden beispielsweise im Header übertragen. Insbesondere bei sicherheitskritischen Anwendungen, beispielsweise im Automobilbereich, sind empfangene Daten vor einer Weiterverarbeitung auf Richtigkeit zu überprüfen. Die Überprüfung ist ebenfalls nur sinnvoll, wenn Vereinbarungen (sub-)systemweit eingehalten werden.

Dabei ist es bekannt, empfangene Daten auf Vollständigkeit, Plausibilität und/oder Konsistenz zu überprüfen.

Es ist bekannt, mangelnde Plausibilität anhand von Veränderungen einzelner Bits ("Bitkipper") mit CRC ("Cyclic Redundant Check")-Mechanismen zu erkennen. Dabei bestimmt die Größe des CRC, wie viele "Bitkipper" erkennbar sind. Der Wert wird durch die "Hamming-Distanz" angegeben. Bei dem Kommunikationssystem FlexRay wird beispielsweise ein CRC mit einer Hamming-Distanz von 6 verwendet. Das heißt, dass jede beliebige Kombination von bis zu sechs "Bitkippern" je Datenrahmen erkennbar ist. Übertragungsfehler, bei denen sieben oder mehr Bits eines Datenrahmens verändert wurden, werden teilweise erkannt, sind aber nicht immer eindeutig identifizierbar. Header und Nutzdaten-Segment des Datenrahmens können dabei jeweils durch ein eigenes CRC gesichert werden.

Aus der DE 100 07 070 A1 ist es bekannt, ein zeitgesteuertes Kommunikationssystem mit einer dynamischen Synchronisationsschaltung auszubilden. Dabei wird ein tatsächlicher Empfangszeitpunkt eines Datenrahmens mit einem theoretischen Empfangszeitpunkt verglichen und Abweichungen werden durch einen Korrekturterm abgefangen. Aus "Bussysteme im Automobil CAN, FlexRay und MOST", Thomas Dohmke, Berlin, März 2002 ist es bekannt, versendete Data- und Remote-Frames sendeseitig mit einer Prüfsumme zu versehen. Empfangsseitig wird die Prüfsumme erneut berechnet und mit der gesendeten Prüfsumme verglichen.

Für die Konsistenz wird überprüft, ob alle Kommunikationseinheiten eines Systems die gleiche Sicht auf die kommunizierten Daten besitzen. Zu Fehlern in der Konsistenz kommt es beispielsweise aufgrund von Verzögerungen in der Übertragung oder aufgrund fehlerbehafteter Kommunikationseinheiten, welche nicht oder zu einem falschen Zeitpunkt senden. Für eine Überprüfung der Konsistenz ist es beispielsweise aus TTP/C-Netzwerken bekannt, jedem Knoten Empfangs-Informationen für jeden anderen Knoten zur Verfügung zu stellen. Jedem Knoten sind so alle Empfangszeitpunkte bekannt. Kommt ein Datenrahmen nicht in dem angegebenen Zeitfenster an, so wird dies als ein Fehler erkannt.

Der Erfindung liegt das technische Problem zugrunde, ein Verfahren und eine Vorrichtung zu schaffen, durch welche Fehler in einem Kommunikationssystem besser absicherbar sind.

Die Lösung des Problems ergibt sich durch die Gegenstände mit den Merkmalen der Patentansprüche 1 und 11. Weitere vorteilhafte Ausgestaltungen der Erfindung ergeben sich aus den Unteransprüchen.

Hierfür wird vor einem Senden von Nutzdaten durch einen Knoten eines Clusters relevanten Nutzdaten eine Plausibilität zugeordnet. Die Plausibilität wird mit den Nutzdaten übertragen. Beim Empfangen durch mindestens einen weiteren Knoten des Clusters wird eine Plausibilität der empfangenen Nutzdaten ermittelt und mindestens die Plausibilitäten des sendenden und des empfangenden Knotens werden auf Konsistenz überprüft. Ursächlich für fehlerhafte Nutzdaten sind vielfach Übertragungsfehler. Nutzdaten werden durch analoge oder digitale Sensoren erfasst und gegebenenfalls digitalisiert. Die Digitalisierung und/oder die Kommunikation zwischen Sensor und einem zugeordneten Anwendungs-Controller können jedoch ebenfalls Bitkipper und/oder andere Fehler verursachen. Durch die Zuordnung einer Plausibilität vor dem Senden lassen sich auch Fehler oberhalb der Kommunikationsebene erkennen. Durch den Vergleich mit der Plausibilität beim empfangenden Knoten können Fehler im sendenden Knoten von Fehlern bei der Übertragung oder beim empfangenden Knoten unterschieden werden. Als relevante Nutzdaten werden dabei verteilte Nutzdaten bezeichnet, deren Inhalt beispielsweise aus Sicherheitsgründen bestimmte Konsistenzanforderungen erfüllen müssen.

In einer bevorzugten Ausführungsform wird die Plausibilität vor dem Senden durch einen Host-Controller und/oder in einem Middleware-Layer überprüft. Knoten sind mindestens mit einem Host-Controller für Anwendungssysteme und einem Kommunikations-Controller für die Übertragung ausgebildet. Zwischen den Controllern ist vorzugsweise für eine Entkopplung der Systemsemantiken ein Middleware-Layer angeordnet. Aufgrund einer Plausibilitätsprüfung durch den Host-Controller oder den Middleware-Layer entstehen für die Kommunikationsebene keinerlei zusätzliche Aufgaben und eine Umsetzung ist ohne zusätzliche und/oder veränderte Hardware in der Kommunikationsebene realisierbar.

In einer weiteren Ausführungsform wird den Nutzdaten bei einer Erfassung und/oder einer Digitalisierung ein CRC zugeordnet. Anhand des CRC ist eine Plausibilität überprüfbar. Sensoren liefern analoge oder digitale Werte. Analoge Werte müssen vor einer Weiterverarbeitung digitalisiert werden. Durch die frühe Zuordnung des CRC ist der Inhalt der Nutzdaten über alle Kommunikationsschichten abgesichert. Durch die Verschlüsselung der Daten mit einem CRC ist eine Prüfung auf Plausibilität beim empfangende System ohne zusätzliche Informationen möglich.

In einer weiteren bevorzugten Ausführungsform sendet ein Knoten eine Plausibilitätsliste. Die Plausibilitätsliste des sendenden Knotens umfasst die Plausibilität der Nutzdaten, die durch den Knoten erfasst wurden, und mindestens eine Plausibilität für Nutzdaten, die durch den Knoten empfangen wurden. Bei einem empfangenden Knoten werden mindestens zwei Plausibilitäten verglichen, die den gleichen Nutzdaten zugeordnet sind. Durch die Plausibilitätsliste lassen sich die Sichten mehrerer Knoten auf Daten vergleichen. Dadurch sind beispielsweise auch Fehler beim Empfang eines Knotens von Fehlern in der Übertragung unterscheidbar. Durch die Plausibilitätsliste kann dabei festgelegt werden, welche Knoten für eine Konsistenzüberprüfung berücksichtigt werden sollen. Fehler in Knoten, die nicht in der Plausibilitätsliste berücksichtigt sind, haben keinen Einfluss auf die Konsistenzüberprüfung.

In einer weiteren bevorzugten Ausführungsform umfasst die Plausibilitätsliste mindestens die Plausibilitäten aller relevanten Nutzdaten eines Clusters aus Sicht eines sendenden Knotens. Durch die Berücksichtigung aller relevanten Nutzdaten eines Clusters kann die Plausibilitätsliste möglichst klein gehalten werden. Gleichzeitig ist jedoch eine einfache Anpassung an Veränderungen in Subsystemen möglich. Dabei muss das Kommunikationssystem selbst nicht verändert werden. Das Kommunikationssystem weist dadurch eine hohe Flexibilität aus.

In einer weiteren Ausführungsform wird die Plausibilitätsliste mit einem CRC abgesichert. Dadurch lassen sich Fehler bei der Ermittlung der Plausibilitäten von Fehlern in den Kommunikationsschichten unterscheiden.

In einer bevorzugten Ausführungsform ist die Plausibilität und/oder die Plausibilitätsliste dem Nutzdaten-Segment eines Datenrahmens zugeordnet. Durch die Übertragung der Plausibilitätsliste im Nutzdaten-Segment ist eine einfache Anpassung bestehender Kommunikationssysteme für eine verbesserte Überprüfung der Konsistenz möglich.

In einer weiteren bevorzugten Ausführungsform umfasst ein Knoten mindestens einen Middleware-Layer. Der Middleware-Layer ist mit mindestens einer Speichereinheit ausgebildet. Nutzdaten sind durch den Host-Controller und/oder durch den Kommunikations-Controller in die Speichereinheit einstellbar. Das Einstellen neuer Daten ist durch mindestens ein Neu-Flag signalsierbar. Durch einen Middleware-Layer lassen sich unterschiedliche Semantiken der Anwendungs- und der Kommunikationsebene besser berücksichtigen. Das Anwendungssystem kann dabei beispielsweise zeitgesteuert ausgeführt sein, wobei der Zeittakt vom Zeittakt der Kommunikationsebene abweicht. Vorzugsweise arbeitet die Anwendungsebene ereignisgesteuert. Neue Daten werden aufgrund bestimmter Vorkommnisse abgerufen und/oder durch eine dem Anwendungssystem zugeordnete Sensorik erfasst.

In einer weiteren bevorzugten Ausführungsform werden in der Speichereinheit des Middleware-Layers eines Knotens die Plausibilitätslisten des Knotens und mindestens eines weiteren Knotens des Clusters abgelegt. Dadurch ist nach einem Hochfahren eine Konsistenz systemweit jederzeit überprüfbar. Wird nur die eigene Plausibilitätsliste abgelegt, so kann die Sicht des empfangenden Knotens mit der Sicht des sendenden Knotens verglichen werden. Daneben ist es auch denkbar, die Daten in der Anwendungsebene und/oder der Kommunikationsebene zu speichern.

In einer weiteren Ausführungsform wird die Plausibilität und/oder die Konsistenz von Nutzdaten durch ein Flag signalisiert. Die Auswertung der Plausibilität und/oder der Konsistenz findet in dem Middleware-Layer statt. Durch Setzen von Flags sind Ergebnisse der Auswertung einfach der Anwendungs- und/oder der Kommunikationsebene übermittelbar.

Die Erfindung wird nachfolgend anhand eines bevorzugten Ausführungsbeispiels näher erläutert. Die Figuren zeigen:
- Fig. 1:: eine schematische Darstellung eines Signalfluss durch ein zeitgesteuertes, sicherheitsrelevantes Bussystem,
- Fig. 2:: eine schematische Darstellung einer Konfiguration eines Speicherbereichs,
- Fig. 3:: eine schematisch Darstellung eines Ablaufdiagranns zur Absicherung der Nutzdaten-Übertragung,
- Fig. 4:: eine schematische Darstellung von Plausibilitätslisten beim "Füllen",
- Fig. 5:: eine schematische Darstellung vollständig aufgefüllter Plausibilitätslisten,
- Fig. 6:: eine schematische Darstellung von Plausibilitätslisten bei Auftreten eines einfachen Fehlers,
- Fig. 7:: eine schematische Darstellung von Plausibilitätslisten bei Auftreten eines schwerwiegenden Fehlers und
- Fig. 8:: eine schematische Darstellung von Plausibilitätslisten bei Auftreten eines weiteren Fehlers.

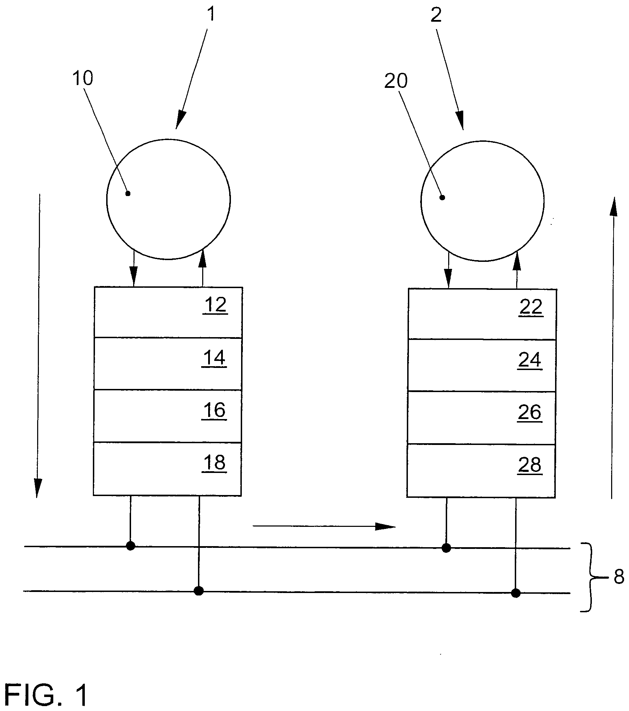

Fig. 1 zeigt schematisch einen Signalfluss durch ein zeitgesteuertes, sicherheitsrelevantes Bussystem, umfassend mindestens zwei Knoten 1, 2, die durch einen Datenbus 8 vernetzt sind. Die Knoten 1, 2 sind mit einem Host-Controller 12, 22, einem Middleware-Layer 14, 24, einem Kommunikations-Controller 16, 26 und einem Treiber-Baustein 18, 28 ausgebildet. Die Elemente eines Knotens 1, 2 können dabei teilweise oder ganz auf einem gemeinsamen Baustein realisiert sein. Der Datenbus 8 ist vorzugsweise ringförmig ausgebildet. Es ist jedoch auch eine sternförmige oder gemischte Stern-Bus-Ausbildung denkbar.

Durch die Host-Controller 12, 22 werden Anwendungssysteme 10, 20 betrieben. Die Anwendungssysteme 10, 20 umfassen Sensoren und Aktoren. Anwendungssysteme in einem Kraftfahrzeug sind beispielsweise Fensterheber, Türöffner, aber auch sicherheitskritische Anwendungssysteme wie Lenksteller oder Bremsverstärker. Die Ansteuerung eines Anwendungssystems 10, 20 erfolgt gemäß einer Software der Host-Controller 12, 22.

Das Anwendungssytem 10 umfasst einen analogen Sensor zur Erfassung von Nutzdaten, welche durch das Anwendungssystem 20 benötigt werden. Die analogen Nutzdaten des Sensors werden durch den Host-Controller 12 digitalisiert. Aufgrund der Digitalisierung und/oder aufgrund von Kommunikationsproblemen zwischen Anwendungssystem 10 und Host-Controller 12 kann es zu Fehlern in den digitalisierten Nutzdaten kommen. Die digitalisierten Nutzdaten werden daher auf Plausibilität überprüft. Der Wert der Nutzdaten ist plausibel wenn er innerhalb eines zulässigen Bereichs liegt und/oder sich seit dem letzten gültigen Wert nur innerhalb eines zulässigen Gradienten verändert hat. Die Nutzdaten werden durch ein CRC abgesichert. Die digitalisierten Nutzdaten und der zugehörige CRC werden in eine Speicherzelle des Middleware-Layers 14 eingestellt. Der Status der Plausibilität der Nutzdaten aus Sicht des Host-Controllers 12 wird in einer weiter unten detaillierter erläuterten Plausibilitätsliste in der Speicherzelle des Middleware-Layers 14 abgelegt.

Durch Setzen eines Neu-Flags wird dem Kommunikations-Controller 16 signalisiert, dass neue Nutzdaten für eine Übertragung bereitstehen. Der Kommunikations-Controller 16 liest zu einem a priori bekannten Zeitpunkt die neuen Daten aus dem Middleware-Layer 14. Nach dem Auslesen wird das Neu-Flag zurückgesetzt. Dadurch wird dem Host-Controller 12 signalisiert, dass die Nutzdaten für eine Übertragung ausgelesen wurden.

Für eine Übertragung werden die Nutzdaten, der zugehörige CRC und die Plausibilitätsliste in einem Datenrahmen eingebunden. Die Plausibilitätsliste kann durch ein weiteres CRC abgesichert werden. Ein der Übertragung auf dem Bussystem zugrunde liegendes Kommunikationsschema bestimmt das Format des Datenrahmens. Der Datenrahmen umfasst vorzugsweise einen Header und ein Nutzdaten-Segment. Nutzdaten, CRC und Plausibilitätsliste (gegebenenfalls mit CRC) werden in das Nutzdaten-Segment eingebunden. Protokollinformationen werden durch den Header gesendet. Ein vorgegebenes Übertragungsprotokoll ist somit von einer Erweiterung des Nutzdaten-Segments im Allgemeinen nicht betroffen. Im Header ist beispielsweise auch eine Empfangsadresse und/oder eine Identifikation der Nutzdaten eingebunden.

Durch den Treiber-Baustein 18 wird der Datenrahmen in ein optisches und/oder elektrisches Signal für die Übertragung umgewandelt. Der Datenrahmen wird über das Bussystem an den Knoten 2 übertragen. Der Treiber-Baustein 28 des empfangenden Knotens dekodiert das Übertragungssignal für eine softwaretechnische Weiterverarbeitung.

Der Kommunikations-Controller 26 überprüft den korrekten Empfang der Nutzdaten und der Plausibilitätsliste. Wurden die Nutzdaten korrekt empfangen, so stellt der Kommunikations-Controller die Daten in den Middleware-Layer 24 und setzt ein Neu-Flag. Durch das Neu-Flag wird dem Host-Controller 22 signalisiert, dass neue Daten für ihn bereitstehen. Nachdem der Host-Controller 22 die Daten abgeholt hat, wird das Neu-Flag wieder zurückgesetzt.

Die empfangenden Nutzdaten werden auf Plausibilität überprüft. Die Überprüfung findet vorzugsweise durch den Host-Controller 22 statt. Zur Überprüfung der empfangen Nutzdaten wird der zugeordnete CRC ausgewertet. Sind die Daten plausibel so wird ein entsprechendes Plausibel-Flag gesetzt.

Die Knoten 1, 2 sind Elemente eines Subsystems. Das Subsystem kann weitere nicht dargestellte Knoten umfassen. Um eine gemeinsame Sicht aller Knoten eines Subsystems auf die gemeinsamen Daten zu gewährleisten wird die Konsistenz überprüft. Eine Konsistenz ist gegeben, wenn alle Knoten des Subsystems die Plausibilität der Nutzdaten gleich bewerten. Eine Plausibilität von Nutzdaten aus Sicht eines Knotens wird durch die Plausibilitätsliste übermittelt.

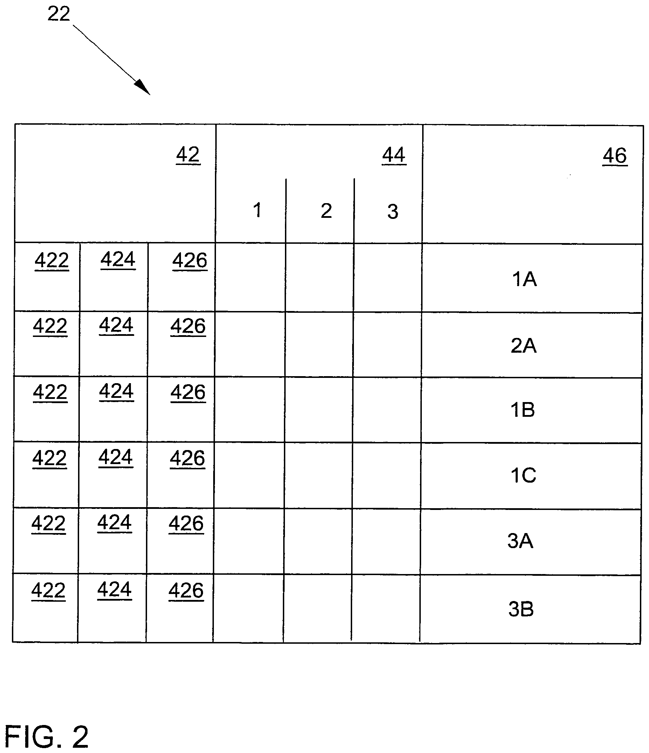

Fig. 2 zeigt schematisch eine Konfiguration eines Speicherbereichs 40 des in Fig. 1 dargestellten Middleware-Layers 24. Der Speicherbereich ist in einen Flag-Bereich 42, einen Indikator-Bereich 44 und einen Nutzdatenbereich 46 aufgeteilt. In den Nutzdatenbereich 46 werden die Nutzdaten 2A gestellt, die durch das zugehörige Anwendungssystem 20 erfasst und für die Weiterverarbeitung digitalisiert wurden, sowie Nutzdaten 1A, 2A, 1B, 1C, 3A, 3B die durch den Knoten 2 empfangen wurden. Im dargestellten Beispiels bilden die in Fig. 1 dargestellten Knoten 1, 2 mit einem Knoten 3 ein Subsystem. Das Kommunikationssystem kann weitere Knoten umfassen, deren Nutzdaten jedoch für das betrachtete Subsystem ohne Bedeutung sind. Es wird daher auch kein Teil des Speicherbereichs 40 für diese Nutzdaten konfiguriert.

Nutzdaten sind mit einer Ziffer und einem Buchstaben bezeichnet. Die Ziffer steht dabei für die Nummer des sendenden Knotens 1, 2, 3. Die Buchstaben geben an, um den wievielten Satz an Nutzdaten es sich handelt. Die erste Botschaft ist mit A gekennzeichnet, die zweite mit B usw. Die Reihenfolge der Nutzdaten 1A, 2A, 1B, 1C, 3A, 3B entspricht einer festgelegten Übertragungsreihenfolge auf dem Datenbus.

Der Flagbereich 42 umfasst für jeden Satz an Nutzdaten drei Flags: ein Neu-Flag 422, ein Plausibel-Flag 424 und ein Konsistenz-Flag 426. Die Plausibilität der Nutzdaten 1A, 2A, 1B, 1C, 3A, 3B wird ermittelt. Bei gegebener Plausibilität wird das entsprechende Flag 424 gesetzt.

Im Indikator-Bereich 44 ist pro Satz an Nutzdaten 1A, 2A, 1B, 1C, 3A, 3B ein Bit für jeden Knoten 1, 2, 3 des Subsystems vorgesehen. Der Zustand dieser Bits wird in Abhängigkeit empfangener Plausibilitätslisten der jeweiligen Knoten gesetzt. Die Plausibilitätsliste wird wie bereits erläutert mit den Nutzdaten versendet. Der Knoten 2 empfängt somit mit den Nutzdaten des Knotens 1 auch dessen Plausibilitätsliste. Diese Plausibilitätsliste wird in den Indikator-Bereich 44 gestellt. Stimmen die Belegungen im Indikator-Bereich 44 und die zugehörigen Plausibel-Flags 424 überein, so herrscht Datenkonsistenz und das entsprechende Konsistenz-Flag 426 wird gesetzt.

Die Plausibilitätsliste des in Fig. 1 dargestellten Knotens 2 wird anhand der Plausibel-Flags 424 erstellt. Dabei werden nur relevante Nutzdaten 1A, 1B, 1C, 2A, 3A berücksichtigt. Als relevante Nutzdaten 1A, 1B, 1C, 2A, 3A werden Nutzdaten bezeichnet, für die Konsistenz gefordert wird. Im dargestellten Beispiel werden die Nutzdaten 3B durch den Knoten 1 und/oder den Knoten 2 benötigt. Daher wird für die Nutzdaten 3B ein Teil des Speicherbereichs 40 vorbehalten. Für die Nutzdaten 3B wird jedoch keine Konsistenz gefordert. Die Nutzdaten 3B sind folglich keine relevanten Nutzdaten. Das Plausibel-Flag 242 der Nutzdaten 3B wird nicht in der Plausibilitätsliste berücksichtigt.

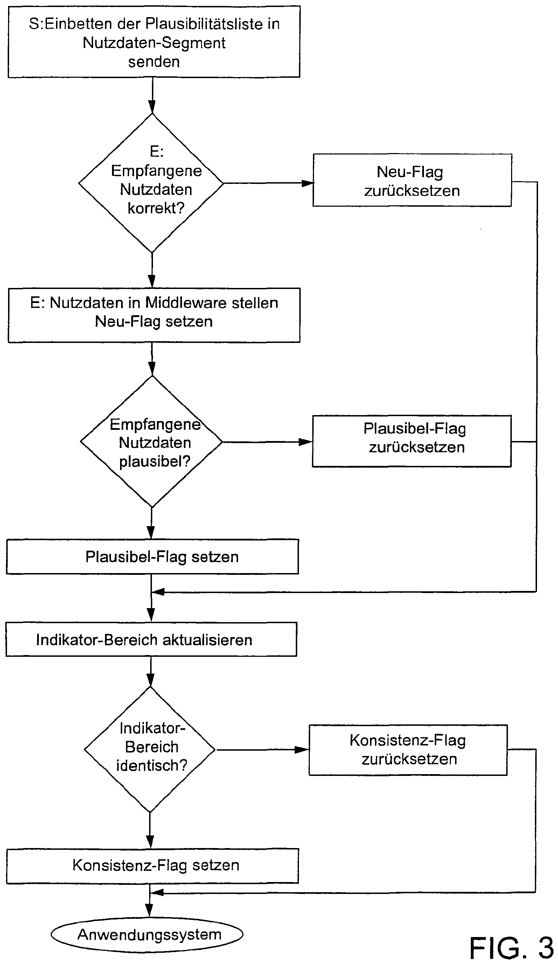

Fig. 3 zeigt schematisch ein Ablaufdiagramm zur Überprüfung der Nutzdaten-Konsistenz. Zunächst wird von einem sendenden Knoten S eine Plausibilitätsliste aktualisiert und in das Nutzdaten-Segment eines Datenrahmens eingebettet. Ein empfangender Knoten E überprüft, ob der Datenrahmen vollständig und korrekt empfangen wurde. Bei korrektem Empfang werden die Nutzdaten in den in Fig. 2 dargestellten Nutzdatenbereich 46 gestellt und das zugehörige Neu-Flag gesetzt. Ist der Empfang nicht korrekt erfolgt, so wird das Neu-Flag zurückgesetzt. Im nächsten Schritt wird die Plausibilität der empfangenen Nutzdaten aus Sicht des empfangenden Knotens überprüft. Sind die empfangenen Nutzdaten plausibel so wird das Plausibel-Flag 424 im Flag-Bereich 42 gemäß Fig. 2 gesetzt. Der Indikator-Bereich 44 wird gemäß der empfangenen Plausibilitätsliste für den sendenden Knoten aktualisiert. Bei Identität der Bits im Indikator-Bereich herrscht Datenkonsistenz und das entsprechende Konsistenz-Flag wird gesetzt. Ein Konsistenz-Flag kann auch für nicht-plausible Nutzdaten gesetzt werden, wenn kein relevanter Knoten die Nutzdaten gültig empfangen hat. Die Nutzdaten werden dem Anwendungssystem zur Verfügung gestellt, wobei das Anwendungssystem durch Überprüfen der Flags eine Qualität der Nutzdaten einfach beurteilen kann.

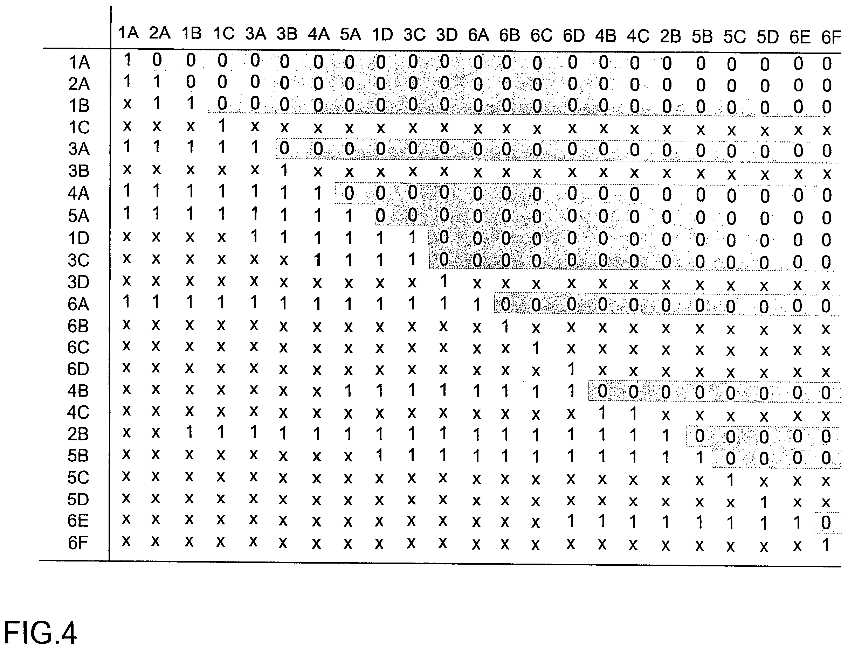

In den Fig. 4 - 8 sind schematisch verschiedene Plausibilitätslisten für ein Subsystem umfassend die Knoten 1 - 6 dargestellt. Die Nomenklatur der Nutzdaten entspricht Fig. 2. Der Kommunikationszyklus ist des Subsystems aus den Knoten 1 - 6 ist 1A, 2A, 1B, 1C, 3A, 3B, 4A, 5A, 1D, 3C, 3D, 6A, 6B, 6C, 6D, 4B, 4C, 2B, 5B, 5C, 5D, 6E, 6F. Dabei senden die Knoten 1, 3, 4, 5 und 6 teilweise mehrere Nutzdaten hintereinander. Die Sicht eines Knotens auf Nutzdaten verändert sich nur für neu erfasste oder empfangene Nutzdaten. Zur Reduzierung des Berechnungsaufwandes werden in anderen Fällen alte Werte unverändert übernommen. Werte, die unverändert übernommen werden, sind in den Fig. 4 - 8 durch ein X gekennzeichnet. Eine "1" kennzeichnet den fehlerfreien Empfang eines Nutzdatensatzes und eine "0" oder ein schwarzer Kasten einen fehlerbehafteten Empfang.

Fig. 4 zeigt schematisch das "Füllen" der Plausibilitätslisten während eines Initialisierungsvorgangs. Die ersten versendeten Nutzdaten sind die Nutzdaten 1A des Knotens 1. Da zu diesem Zeitpunkt keine weiteren Informationen vorliegen, wird der Status als fehlerhaft angegeben. Die Plausibilitätsliste wird sukzessive gefüllt. Nach dem Durchlauf eines Zyklus ist die Plausibilitätsliste für alle Nutzdaten gefüllt.

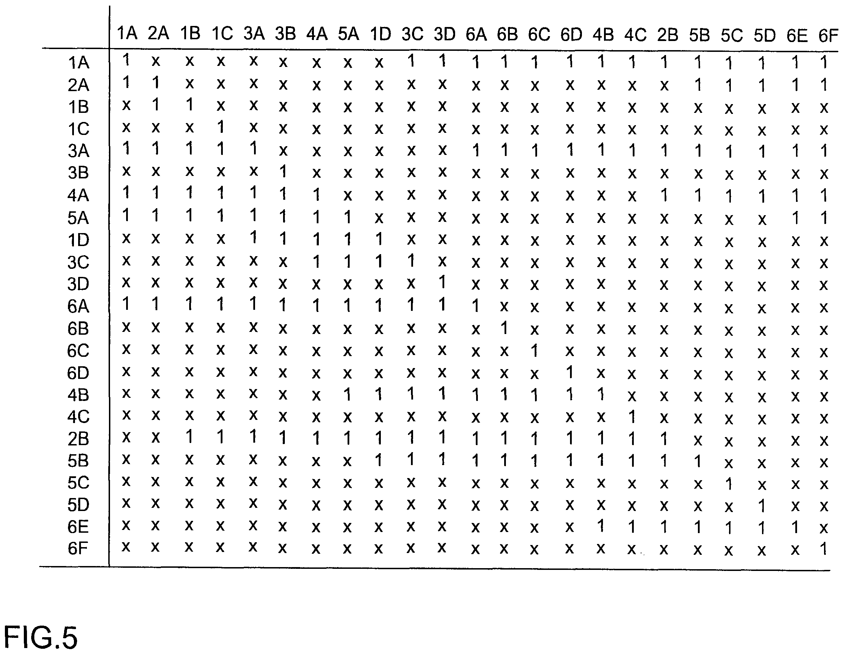

In Fig. 5 sind die vollständig aufgefüllten Plausibilitätslisten im Falle einer systemweiten Konsistenz dargestellt.

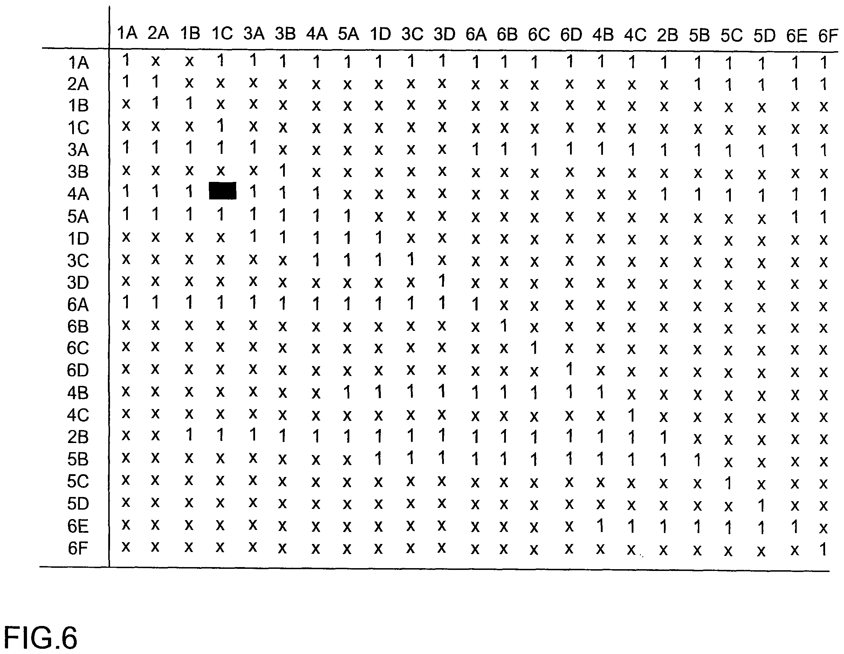

In Fig. 6 sind die Plausibilitätslisten bei Auftreten eines Fehlers. Der Knoten 4 hat die Nutzdaten 1C nicht korrekt empfangen. Die ersten Nutzdaten, welche nach dem fehlerhaften Empfang versendet werden, sind die Nutzdaten 4A. In der mit den Nutzdaten 4A versendeten Plausibilitätsliste wird der Eintrag für 1C zu "0" gesetzt. Die vernetzten Knoten 1, 2, 3, 5 und 6 vermerken in den in Fig. 2 dargestellten Indikator-Bereichen, dass der Knoten 4 die Nutzdaten 1C nicht fehlerfrei erhalten hat. Systemweit wird somit festgestellt, dass der Knoten 4 die Nutzdaten 1C nicht feherlfrei erhalten hat und folglich auch nicht verarbeiten kann. Die 2, 3, 5 und 6 empfangen die Nutzdaten 1C dagegen fehlerfrei, wie durch die gesetzte "1" in den Plausibilitätslisten erkennbar ist.

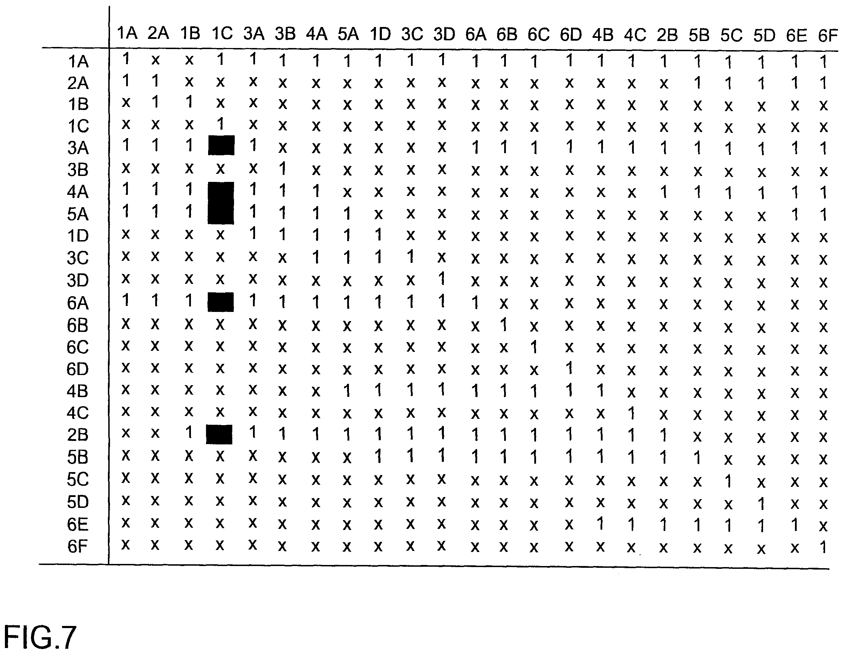

In Fig. 7 ist ein schwerwiegenderer Fehler dargestellt, wobei kein Knoten die Nutzdaten 1C fehlerfrei empfängt. Lediglich der Knoten 1 bewertet den Status der Nutzdaten 1C als plausibel.

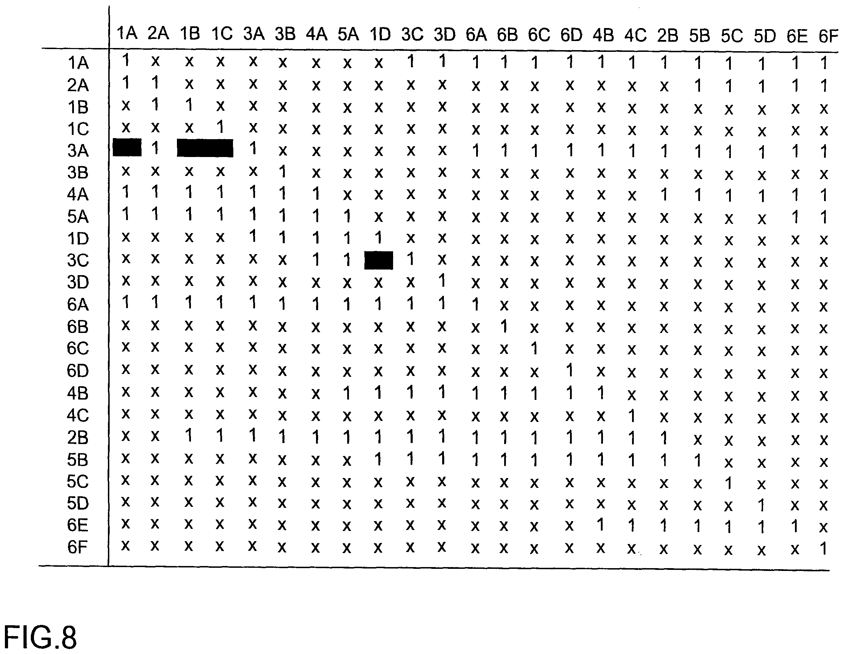

In Fig. 8 ist ein Fehler dargestellt, wobei der Knoten 3 keine Nutzdaten des Knotens 1 empfangen kann.

Die Fig. 4 - 8 zeigen beispielhaft, wie verschiedene Fehler erkannt und kategorisiert werden können. Ausgehend von der Fehlererkennung und Kategorisierung ist es möglich, Strategien zu entwickeln, wie die Fehler abgefangen werden können. Dabei ist es denkbar, dass die Aufgaben fehlerhafter Knoten durch andere Knoten ersetzt werden und/oder Nutzdaten aus redundant vorhandenen Knoten ermittelt werden.

## Patentansprüche

1. Verfahren zur fehlerabgesicherten Übertragung von Nutzdaten in einem vernetzten, zeitgesteuerten Kommunikationssystem, umfassend mindestens ein Cluster mit mindestens zwei Knoten, wobei Knoten mindestens mit einem Host-Controller und einem Kommunikations-Controller ausgebildet sind und mindestens ein Knoten Nutzdaten erfasst und an mindestens einen zweiten Knoten des Clusters überträgt,
**dadurch gekennzeichnet, dass**
mindestens von relevanten Nutzdaten (1A - 1C, 2A, 2B, ...) des Knotens (1, 2) vor einem Senden eine Plausibilität (424) ermittelt wird,
mindestens die Plausibilität (424) mit den Nutzdaten übertragen wird,
nach einem Empfangen durch mindestens einen zweiten Knoten (1, 2) des Clusters die Plausibilität (424) der empfangenen Nutzdaten (1A - 1C, 2A, 2B, 3A, ...) ermittelt wird und
mindestens die Plausibilitäten (424) des sendenden und des empfangenden Knotens (1, 2) auf Konsistenz (426) überprüft werden.

2. Verfahren nach Anspruch 1, wobei mindestens die Plausibilität (424) vor dem Senden durch den Host-Controller (12, 22) und/oder in einem Middleware-Layer (14, 24) überprüft wird.

3. Verfahren nach einem der Ansprüche 1 oder 2, **dadurch gekennzeichnet, dass** Nutzdaten (1A - 1C, 2A, 2B, ...) bei einer Erfassung und/oder einer Digitalisierung ein CRC zugeordnet wird.

4. Verfahren nach einem der genannten Ansprüche, **dadurch gekennzeichnet, dass** ein Knoten (1, 2) eine Plausibilitätsliste sendet, wobei die Plausibilitätsliste die Plausibilität (424) durch den Knoten (1, 2) erfasster Nutzdaten und mindestens die Plausibilität (424) empfangener Nutzdaten umfasst, und beim empfangenden Knoten (1, 2) mindestens zwei Plausibilitäten (424) verglichen werden, die den gleichen Nutzdaten (1A - 1C, 2A, 2B, ...) zugeordnet sind.

5. Verfahren nach Anspruch 4, **dadurch gekennzeichnet, dass** durch die Plausibilitätsliste mindestens die Plausibilitäten (424) aller relevanten Nutzdaten (1A - 1C, 2A, 2B, ...) eines Clusters aus Sicht eines sendenden Knotens (1, 2) übermittelt werden

6. Verfahren nach Anspruch 4 oder 5, **dadurch gekennzeichnet, dass** die Plausibilitätsliste mit einem CRC abgesichert wird.

7. Verfahren nach Anspruch 4, **dadurch gekennzeichnet, dass** die Plausibilität (424) und/oder die Plausibilitätsliste dem Nutzdaten-Segment eines Datenrahmens zugeordnet wird.

8. Verfahren nach einem der Ansprüche 4-7, **dadurch gekennzeichnet, dass** Nutzdaten (1A - 1C, 2A, 2B, ...) durch den Host-Controller (12, 22) und/oder durch den Kommunikations-Controller (16, 26) in eine Speichereinheit eines Middleware-Layers (14, 24) eingestellt werden und das Einstellen neuer Nutzdaten durch mindestens ein Neu-Flag (422) signalisiert wird.

9. Verfahren nach Anspruch 8, **dadurch gekennzeichnet, dass** in der Speichereinheit (40) des Middleware-Layers (14, 24) eines Knotens (1, 2) die Plausibilitätslisten des Knotens (1, 2) und mindestens eines weiteren Knotens (1, 2) des Clusters abgelegt werden.

10. Verfahren nach einem der genannten Ansprüche, **dadurch gekennzeichnet, dass** die Plausibilität (424) und/oder die Konsistenz (426) von Nutzdaten (1A - 1C, 2A, 2B, ...) durch ein Flag signalisiert wird.

11. Vorrichtung zur fehlerabgesicherten Übertragung von Nutzdaten in einem vernetzten, zeitgesteuerten Kommunikationssystem, umfassend mindestens ein Cluster mit mindestens zwei Knoten, wobei Knoten mindestens mit einem Host-Controller und einem Kommunikations-Controller ausgebildet sind und durch mindestens einen Knoten Nutzdaten erfasst werden und an mindestens einen zweiten Knoten des Clusters übertragen werden, **dadurch gekennzeichnet, dass**
mindestens von relevanten Nutzdaten (1A - 1C, 2A, 2B, ...) des Knotens (1, 2) vor einem Senden eine Plausibilität (424) ermittelt wird, mindestens die Plausibilität (424) mit den Nutzdaten (1A - 1C, 2A, 2B, ...) übertragen wird, nach einem Empfangen durch mindestens einen zweiten Knoten (1, 2) des Clusters die Plausibilität (424) der empfangenen Nutzdaten (1A - 1C, 2A, 2B, 3A, ...) ermittelt wird und mindestens die Plausibilitäten (424) des sendenden und des empfangenden Knotens (1, 2) auf Konsistenz (426) überprüft werden.

12. Vorrichtung nach Anspruch 11, wobei mindestens die Plausibilität vor dem Senden durch den Host-Controller (12, 22) und/oder in einem Middleware-Layer (14, 24) überprüft wird.

13. Vorrichtung nach einem der Ansprüche 11 oder 12, **dadurch gekennzeichnet, dass** Nutzdaten (1A - 1C, 2A, 2B, ...) bei einer Erfassung und/oder einer Digitalisierung ein CRC zugeordnet wird.

14. Vorrichtung nach einem der Ansprüche 11 bis 13, **dadurch gekennzeichnet, dass** durch ein Knoten (1, 2) eine Plausibilitätsliste gesendet wird, wobei die Plausibilitätsliste die Plausibilität (424) durch den Knoten (1, 2) erfasster Nutzdaten (1A - 1C, 2A, 2B, ...) und mindestens die Plausibilität (424) empfangener Nutzdaten (1A - 1C, 2A, 2B, ...) umfasst, und beim empfangenden Knoten (1, 2) mindestens die Plausibilitäten (424) verglichen werden, die den gleichen Nutzdaten (1A - 1C, 2A, 2B, ...) zugeordnet sind.

15. Vorrichtung nach Anspruch 14, **dadurch gekennzeichnet, dass** durch die Plausibilitätsliste mindestens die Plausibilitäten (424) aller relevanten Nutzdaten (1A - 1C, 2A, 2B, ...) eines Clusters aus Sicht eines sendenden Knotens (1, 2) übertragen werden.

16. Vorrichtung nach Anspruch 14 oder 15 **dadurch gekennzeichnet, dass** die Plausibilitätsliste mit einem CRC abgesichert ist.

17. Vorrichtung nach einem der Ansprüche 14 bis 16, **dadurch gekennzeichnet, dass** die Plausibilität (424) und/oder die Plausibilitätsliste in einem Nutzdaten-Segment eines Datenrahmens eingebettet wird.

18. Vorrichtung nach einem der Ansprüche 14 bis 17, **dadurch gekennzeichnet, dass** die Knoten (1, 2) mit einem Middleware-Layer (14, 24) ausgebildet sind, der Middleware-Layer (14, 24) eine Speichereinheit (40) umfasst, Nutzdaten (1A - 1C, 2A, 2B, ...) durch den Host-Controller (12, 22) und/oder durch den Kommunikations-Controller (16, 26) in die Speichereinheit (40) des Middleware-Layers (14, 24) eingestellt werden und das Einstellen neuer Nutzdaten durch mindestens ein Neu-Flag (422) signalisiert wird.

19. Vorrichtung nach Anspruch 18, **dadurch gekennzeichnet, dass** in der Speichereinheit (40) des Middleware-Layers (1, 24) eines Knotens (1, 2) die Plausibilitätslisten des Knotens (1, 2) und mindestens eines weiteren Knotens (1, 2) des Clusters abgelegt werden.

20. Vorrichtung nach einem der Ansprüche 11 bis 19, **dadurch gekennzeichnet, dass** die Plausibilität (424) und/oder die Konsistenz (426) von Nutzdaten (1A - 1C, 2A, 2B, ...) durch ein Flag signalisiert wird.

## Claims

1. Method for error-protected transmission of useful data in a networked, time-controlled communication system, comprising at least one cluster having at least two nodes, wherein nodes are formed with at least a host controller and a communication controller and at least one node captures useful data and transmits them to at least one second node of the cluster,
**characterized in that**
a plausibility (424) is ascertained for at least relevant useful data (1A - 1C, 2A, 2B, ...) of the node (1, 2) before transmission,
at least the plausibility (424) is transmitted with the useful data,
after reception by at least one second node (1, 2) of the cluster, the plausibility (424) of the received useful data (1A - 1C, 2A, 2B, 3A, ...) is ascertained, and
at least the plausibilities (424) of the sending and the receiving node (1, 2) are checked for consistency (426).

2. Method according to Claim 1, wherein at least the plausibility (424) is checked by the host controller (12, 22) and/or in a middleware layer (14, 24) before transmission.

3. Method according to either of Claims 1 and 2, **characterized in that** useful data (1A - 1C, 2A, 2B, ...) are allocated a CRC on capture and/or digitization.

4. Method according to one of the cited claims, **characterized in that** a node (1, 2) sends a plausibility list, wherein the plausibility list comprises the plausibility (424) of useful data captured by the node (1, 2) and at least the plausibility (424) of received useful data, and at least two plausibilities (424) associated with the same useful data (1A - 1C, 2A, 2B, ...) are compared at the receiving node (1, 2).

5. Method according to Claim 4, **characterized in that** the plausibility list transmits at least the plausibilities (424) of all relevant useful data (1A - 1C, 2A, 2B, ...) of a cluster from the point of view of a sending node (1, 2).

6. Method according to Claim 4 or 5, **characterized in that** the plausibility list is protected using a CRC.

7. Method according to Claim 4,
**characterized in that**
the plausibility (424) and/or the plausibility list is allocated to the useful data segment of a data frame.

8. Method according to one of Claims 4-7,
**characterized in that**
useful data (1A - 1C, 2A, 2B, ...) are put into a memory unit of a middleware layer (14, 24) by the host controller (12, 22) and/or by the communication controller (16, 26) and the putting-in of new useful data is signalled by at least one New flag (422).

9. Method according to Claim 8, **characterized in that** the memory unit (40) of the middleware layer (14, 24) of a node (1, 2) is used to store the plausibility lists of the node (1, 2) and of at least one further node (1, 2) of the cluster.

10. Method according to one of the cited claims, **characterized in that** the plausibility (424) and/or the consistency (426) of useful data (1A - 1C, 2A, 2B, ...) is signalled by a flag.

11. Apparatus for error-protected transmission of useful data in a networked, time-controlled communication system, comprising at least one cluster having at least two nodes, wherein nodes are formed with at least a host controller and a communication controller and useful data are captured by at least one node and transmitted to at least one second node of the cluster,
**characterized in that**
a plausibility (424) is ascertained for at least relevant useful data (1A - 1C, 2A, 2B, ...) of the node (1, 2) before transmission,
at least the plausibility (424) is transmitted with the useful data (1A - 1C, 2A, 2B, ...),
after reception by at least one second node (1, 2) of the cluster, the plausibility (424) of the received useful data (1A - 1C, 2A, 2B, 3A, ...) is ascertained, and
at least the plausibilities (424) of the sending and the receiving node (1, 2) are checked for consistency (426).

12. Apparatus according to Claim 11, wherein at least the plausibility is checked by the host controller (12, 22) and/or in a middleware layer (14,24) before transmission.

13. Apparatus according to either of Claims 11 and 12, **characterized in that** useful data (1A - 1C, 2A, 2B, ...) are allocated a CRC on capture and/or digitization.

14. Apparatus according to one of Claims 11 to 13, **characterized in that** a plausibility list is sent by a node (1, 2), wherein the plausibility list comprises the plausibility (424) of useful data (1A - 1C, 2A, 2B, ...) captured by the node (1, 2) and at least the plausibility (424) of received useful data (1A - 1C, 2A, 2B, ...), and at least the plausibilities (424) associated with the same useful data (1A - 1C, 2A, 2B, ...) are compared at the receiving node (1, 2).

15. Apparatus according to Claim 14, **characterized in that** the plausibility list transmits at least the plausibilities (424) of all relevant useful data (1A - 1C, 2A, 2B, ...) of a cluster from the point of view of a sending node (1, 2).

16. Apparatus according to Claim 14 or 15, **characterized in that** the plausibility list is protected using a CRC.

17. Apparatus according to one of Claims 14 to 16,
**characterized in that**
the plausibility (424) and/or the plausibility list is embedded in a useful data segment of a data frame.

18. Apparatus according to one of Claims 14 to 17,
**characterized in that**
the nodes (1, 2) are formed with a middleware layer (14, 24), the middleware layer (14, 24) comprises a memory unit (40), useful data (1A - 1C, 2A, 2B, ...) are put into the memory unit (40) of the middleware layer (14, 24) by the host controller (12, 22) and/or by the communication controller (16, 26), and the putting-in of new useful data is signalled by at least one New flag (422).

19. Apparatus according to Claim 18, **characterized in that** the memory unit (40) of the middleware layer (14, 24) of a node (1, 2) is used to store the plausibility lists of the node (1, 2) and of at least one further node (1, 2) of the cluster.

20. Apparatus according to one of Claims 11 to 19, **characterized in that** the plausibility (424) and/or the consistency (426) of useful data (1A - 1C, 2A, 2B, ...) is signalled by a flag.

## Revendications

1. Procédé de transmission de données utiles protégées contre les erreurs dans un système de communication en réseau commandé temporellement, comprenant au moins une grappe qui comporte au moins deux noeuds, dans lequel des noeuds sont réalisés au moyen d'au moins un contrôleur hôte et un contrôleur de communication et au moins un noeud acquiert des données utiles et les transmet à au moins un second noeud de la grappe,
**caractérisé en ce qu'**une plausibilité (424) d'au moins des données utiles pertinentes (1A - 1C, 2A,, 2B, ....) du noeud (1, 2) est déterminée avant une émission, au moins la plausibilité (424) est transmise avec les données utiles, la plausibilité (424) des données utiles reçues (1A - 1C, 2A, 2B, 3A,...) est déterminée après réception par au moins un second noeud (1, 2) de la grappe et au moins les plausibilités (424) des noeuds émetteur et récepteur (1, 2) sont vérifiées du point de vue de la cohérence (426).

2. Procédé selon la revendication 1, dans lequel au moins la plausibilité (424) est vérifiée avant l'émission par le contrôleur hôte (12, 22) et/ou dans une couche logicielle intermédiaire (14, 24).

3. Procédé selon l'une des revendications 1 ou 2, **caractérisé en ce qu'**un CRC est associé à des données utiles (1A - 1C, 2A, 2B, ...) lors de l'acquisition et/ou de la numérisation.

4. Procédé selon l'une des revendications précédentes, **caractérisé en ce qu'**un noeud (1, 2) transmet une liste de plausibilités, dans lequel la liste de plausibilités comprend la plausibilité (424) de données utiles acquises par le noeud (1, 2) et au moins la plausibilité (424) de données utiles reçues et, dans le cas du noeud récepteur (1, 2), au moins deux plausibilités (424) qui sont associées aux mêmes données utiles (1A-1C, 2A, 2B, ...) sont comparées.

5. Procédé selon la revendication 4, **caractérisé en ce qu'**au moins les plausibilités (424) de toutes les données utiles (1A - 1C, 2A, 2B, ...) pertinentes d'une grappe du point de vue d'un noeud émetteur (1, 2) sont transmises par l'intermédiaire de la liste de plausibilités.

6. Procédé selon la revendication 4 ou 5, **caractérisé en ce que** la liste de plausibilités est sécurisée au moyen d'un CRC.

7. Procédé selon la revendication 4, **caractérisé en ce que** la plausibilité (424) et/ou la liste de plausibilités est associée au segment de données utiles d'une trame de données.

8. Procédé selon l'une des revendications 4-7, **caractérisé en ce que** des données utiles (1A - 1C, 2A, 2B, ...) sont définies par le contrôleur hôte (12, 22) et/ou par le contrôleur de communication (16, 26) dans une unité de mémoire d'une couche logicielle intermédiaire (14, 24) et dans lequel le réglage des données utiles est signalé par au moins un drapeau nouveau (422).

9. Procédé selon la revendication 8, **caractérisé en ce que** les listes de plausibilités du noeud (1, 2) et d'au moins un autre noeud (1, 2) de la grappe sont stockées dans l'unité de mémoire (40) de la couche logicielle intermédiaire (14, 24) d'un noeud (1, 2).

10. Procédé selon l'une des revendications précédentes, **caractérisé en ce que** la plausibilité (424) et/ou la cohérence (426) des données utiles (1A - 1C, 2A, 2B, ...) est signalée par un drapeau.

11. Dispositif de transmission de données utiles protégées contre les erreurs dans un système de communication en réseau commandé temporellement, comprenant au moins une grappe qui comporte au moins deux noeuds, dans lequel des noeuds sont réalisés au moyen d'au moins un contrôleur hôte et un contrôleur de communication et des données utiles sont acquises par au moins un noeud et transmises à au moins un second noeud de la grappe,
**caractérisé en ce qu'**une plausibilité (424) d'au moins des données utiles pertinentes (1A - 1C, 2A, 2B, ...) du noeud (1, 2) avant une émission est déterminée,
**en ce qu'**au moins la plausibilité (424) est transmise avec les données utiles (1A - 1C, 2A, 2B, ...), **en ce que** la plausibilité (424) des données utiles reçues (1A - 1C, 2A, 2B, 3A, ...) est déterminée après une réception par au moins un second noeud (1,2) de la grappe et **en ce qu'**au moins les plausibilités (424) des noeuds émetteur (1, 2) et récepteur (1, 2) est vérifiée du point de vue de la cohérence.

12. Dispositif selon la revendication 11, dans lequel au moins la plausibilité est vérifiée avant l'émission par le contrôleur hôte (12, 22) et/ou dans une couche logicielle intermédiaire (14, 24).

13. Dispositif selon l'une des revendications 11 ou 12, **caractérisé en ce qu'**un CRC est associé à des données utiles (1A - 1C, 2A, 2B, ...) pendant une acquisition et/ou une numérisation.

14. Dispositif selon l'une des revendications 11 à 13, **caractérisé en ce qu'**une liste de plausibilités est émise par un noeud (1, 2), dans lequel la liste de plausibilités comprend la plausibilité (424) de données utiles (1A - 1C, 2A, 2B, ...) acquises par le noeud (1, 2) et au moins la plausibilité (424) de données utiles reçues (1A - 1C, 2A, 2B, ...) et, dans le cas du noeud récepteur (1, 2), au moins les plausibilités (424) qui sont associées aux mêmes données utiles (1A - 1C, 2A, 2B, ...) sont comparées.

15. Dispositif selon la revendication 14, **caractérisé en ce qu'**au moins les plausibilités (424) de toutes les données utiles pertinentes (1A - 1C, 2A, 2B, ...) d'une grappe du point de vue d'un noeud émetteur (1, 2) sont transmises par l'intermédiaire de la liste de plausibilités.

16. Dispositif selon la revendication 14 ou 15, **caractérisé en ce que** la liste de plausibilités est sécurisée par un CRC.

17. Dispositif selon l'une des revendications 14 à 16, **caractérisé en ce que** la plausibilité (424) et/ou la liste de plausibilités est intégrée dans un segment de données utiles d'une trame de données.

18. Dispositif selon l'une des revendications 14 à 17, **caractérisé en ce que** les noeuds (1, 2) sont réalisés au moyen d'une couche logicielle intermédiaire (14, 24), **en ce que** la couche logicielle intermédiaire (14, 24) comprend une unité de mémoire (40), **en ce que** des données utiles (1A - 1C, 2A, 2B, ...) sont chargées dans l'unité de mémoire (40) de la couche logicielle intermédiaire (14, 24) par le contrôleur hôte (12, 22) et/ou le contrôleur de communication (16, 26) et **en ce que** la définition de nouvelles données utiles est signalé par au moins un drapeau nouveau (422).

19. Dispositif selon la revendication 18, **caractérisé en ce que** les listes de plausibilités du noeud (1, 2) et d'au moins un autre noeud (1, 2) de la grappe sont stockées dans l'unité de mémoire (40) de la couche logicielle intermédiaire (14, 24) d'un noeud (1, 2).

20. Dispositif selon l'une des revendications 11 à 19, **caractérisé en ce que** la plausibilité (424) et/ou la cohérence (426) de données utiles (1A - 1C, 2A, 2B, ...) est signalée par un drapeau.
